# EUROPEAN PATENT APPLICATION

(11) **EP 4 708 724 A2**
(43) Date of publication of application: **11.03.2026**
(21) Application number: 26153161.0
(22) Date of filing: 05.10.2023
(51) Int. Cl.: H04B 7/185

(54) **FEEDBACK ASSOCIATED WITH ALIGNMENT OF A USER EQUIPMENT ANTENNA WITH A SATELLITE**

(30) Priority: 15.11.2022 US 202263383891 P; 04.10.2023 US 202318480849
(62) Divisional of application: 23804838.3
(71) Applicant: QUALCOMM Incorporated, San Diego, CA 92121-1714 (US)
(72) Inventor: KIES, Jonathan, San Diego (US); GRILLI, Francesco, San Diego (US); ZHANG, Danlu, San Diego (US); HAN,, Junsheng, San Diego (US); MUTHURAMAN, Kannan, San Diego (US); KULKARNI, Rashmi, San Diego (US); RAMASAMY, Bala, San Diego (US)
(74) Representative: Reddie & Grose LLP

(57) **Abstract**

In an aspect, a user equipment (UE) determines a target orientation associated with the UE for a two-way satellite communication session that provides a line of sight (LOS) alignment between an antenna of the UE with a satellite antenna, determines a current orientation associated with the UE, determines difference information associated with a difference between the current orientation of the UE and the target orientation of the UE; and transmits, to a user feedback component, an instruction to provide user feedback that is based on the difference information and that comprises non-visual user feedback or visual feedback that is separate from a display screen of the UE.

## Description

### CROSS-REFERENCE TO RELATED APPLICATIONS

The present Application for Patent claims the benefit of U.S. Provisional Application No. 63/383,891, entitled "FEEDBACK ASSOCIATED WITH ALIGNMENT OF A USER EQUIPMENT ANTENNA WITH A SATELLITE," filed November 15, 2022, assigned to the assignee hereof, and expressly incorporated herein by reference in its entirety.

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), enables higher data transfer speeds, greater numbers of connections, and better coverage, among other improvements. The 5G standard, according to the Next Generation Mobile Networks Alliance, is designed to provide higher data rates as compared to previous standards, more accurate positioning (e.g., based on reference signals for positioning (RS-P), such as downlink, uplink, or sidelink positioning reference signals (PRS)), and other technical enhancements. These enhancements, as well as the use of higher frequency bands, advances in PRS processes and technology, and high-density deployments for 5G, enable highly accurate 5G-based positioning.

### SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

In an aspect, a method of operating a user equipment (UE) includes determining a target orientation associated with the UE for a two-way satellite communication session that provides a line of sight (LOS) alignment between an antenna of the UE with a satellite antenna; determining a current orientation associated with the UE; determining difference information associated with a difference between the current orientation of the UE and the target orientation of the UE; and transmitting, to a user feedback component, an instruction to provide user feedback that is based on the difference information and that comprises non-visual user feedback or visual feedback that is separate from a display screen of the UE.

In an aspect, a user equipment (UE) includes a memory; at least one transceiver; and at least one processor communicatively coupled to the memory and the at least one transceiver, the at least one processor configured to: determine a target orientation associated with the UE for a two-way satellite communication session that provides a line of sight (LOS) alignment between an antenna of the UE with a satellite antenna; determine a current orientation associated with the UE; determine difference information associated with a difference between the current orientation of the UE and the target orientation of the UE; and transmit, via the at least one transceiver, to a user feedback component, an instruction to provide user feedback that is based on the difference information and that comprises non-visual user feedback or visual feedback that is separate from a display screen of the UE.

In an aspect, a user equipment (UE) includes means for determining a target orientation associated with the UE for a two-way satellite communication session that provides a line of sight (LOS) alignment between an antenna of the UE with a satellite antenna; means for determining a current orientation associated with the UE; means for determining difference information associated with a difference between the current orientation of the UE and the target orientation of the UE; and means for transmitting, to a user feedback component, an instruction to provide user feedback that is based on the difference information and that comprises non-visual user feedback or visual feedback that is separate from a display screen of the UE.

In an aspect, a non-transitory computer-readable medium storing computer-executable instructions that, when executed by a user equipment (UE), cause the UE to: determine a target orientation associated with the UE for a two-way satellite communication session that provides a line of sight (LOS) alignment between an antenna of the UE with a satellite antenna; determine a current orientation associated with the UE; determine difference information associated with a difference between the current orientation of the UE and the target orientation of the UE; and transmit, to a user feedback component, an instruction to provide user feedback that is based on the difference information and that comprises non-visual user feedback or visual feedback that is separate from a display screen of the UE.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIG. 3 is a simplified block diagrams of several sample aspects of components that may be employed in a user equipment (UE) and configured to support communications as taught herein.
FIG. 4 is a diagram illustrating an emergency message via satellite scenario in which the user is orienting a mobile device towards a satellite, according to aspects of the disclosure.
FIG. 5 illustrates an example method of wireless communication, according to aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

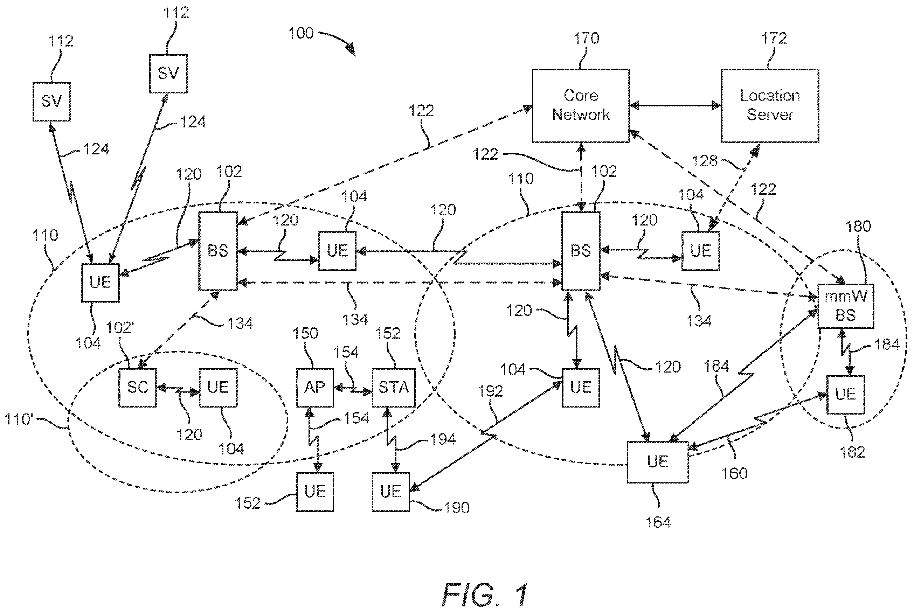

**FIG. 1** illustrates an example wireless communications system 100, according to aspects of the disclosure. The wireless communications system 100 (which may also be referred to as a wireless wide area network (WWAN)) may include various base stations 102 (labeled "BS") and various UEs 104. The base stations 102 may include macro cell base stations (high power cellular base stations) and/or small cell base stations (low power cellular base stations). In an aspect, the macro cell base stations may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labeled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In some cases, the UE 164 and the UE 182 may be capable of sidelink communication. Sidelink-capable UEs (SL-UEs) may communicate with base stations 102 over communication links 120 using the Uu interface (i.e., the air interface between a UE and a base station). SL-UEs (e.g., UE 164, UE 182) may also communicate directly with each other over a wireless sidelink 160 using the PC5 interface (i.e., the air interface between sidelink-capable UEs). A wireless sidelink (or just "sidelink") is an adaptation of the core cellular (e.g., LTE, NR) standard that allows direct communication between two or more UEs without the communication needing to go through a base station. Sidelink communication may be unicast or multicast, and may be used for device-to-device (D2D) media-sharing, vehicle-to-vehicle (V2V) communication, vehicle-to-everything (V2X) communication (e.g., cellular V2X (cV2X) communication, enhanced V2X (eV2X) communication, etc.), emergency rescue applications, etc. One or more of a group of SL-UEs utilizing sidelink communications may be within the geographic coverage area 110 of a base station 102. Other SL-UEs in such a group may be outside the geographic coverage area 110 of a base station 102 or be otherwise unable to receive transmissions from a base station 102. In some cases, groups of SL-UEs communicating via sidelink communications may utilize a one-to-many (1:M) system in which each SL-UE transmits to every other SL-UE in the group. In some cases, a base station 102 facilitates the scheduling of resources for sidelink communications. In other cases, sidelink communications are carried out between SL-UEs without the involvement of a base station 102.

In an aspect, the sidelink 160 may operate over a wireless communication medium of interest, which may be shared with other wireless communications between other vehicles and/or infrastructure access points, as well as other RATs. A "medium" may be composed of one or more time, frequency, and/or space communication resources (e.g., encompassing one or more channels across one or more carriers) associated with wireless communication between one or more transmitter / receiver pairs. In an aspect, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.11x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Note that although FIG. 1 only illustrates two of the UEs as SL-UEs (i.e., UEs 164 and 182), any of the illustrated UEs may be SL-UEs. Further, although only UE 182 was described as being capable of beamforming, any of the illustrated UEs, including UE 164, may be capable of beamforming. Where SL-UEs are capable of beamforming, they may beamform towards each other (i.e., towards other SL-UEs), towards other UEs (e.g., UEs 104), towards base stations (e.g., base stations 102, 180, small cell 102', access point 150), etc. Thus, in some cases, UEs 164 and 182 may utilize beamforming over sidelink 160.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

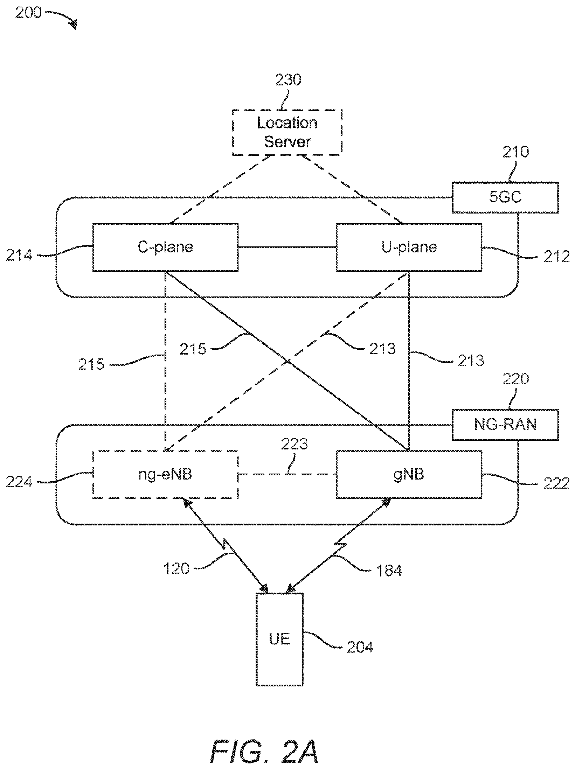

**FIG. 2A** illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

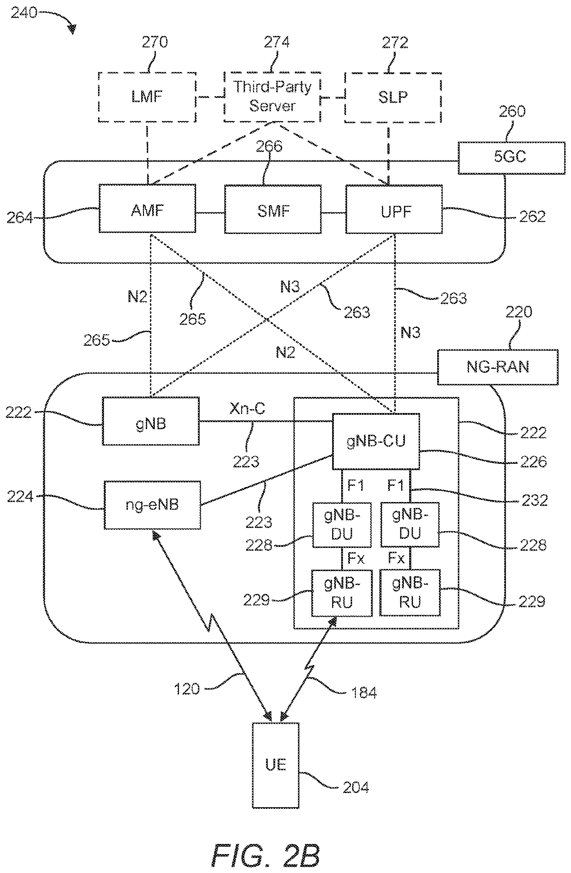

**FIG. 2B** illustrates another example wireless network structure 240. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (e.g., third-party server 274) over a user plane (e.g., using protocols intended to carry voice and/or data like the transmission control protocol (TCP) and/or IP).

Yet another optional aspect may include a third-party server 274, which may be in communication with the LMF 270, the SLP 272, the 5GC 260 (e.g., via the AMF 264 and/or the UPF 262), the NG-RAN 220, and/or the UE 204 to obtain location information (e.g., a location estimate) for the UE 204. As such, in some cases, the third-party server 274 may be referred to as a location services (LCS) client or an external client. The third-party server 274 can be implemented as a plurality of separate servers (e.g., physically separate servers, different software modules on a single server, different software modules spread across multiple physical servers, etc.), or alternately may each correspond to a single server.

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 may be divided between a gNB central unit (gNB-CU) 226, one or more gNB distributed units (gNB-DUs) 228, and one or more gNB radio units (gNB-RUs) 229. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 generally host the radio resource control (RRC), service data adaptation protocol (SDAP), and packet data convergence protocol (PDCP) protocols of the gNB 222. A gNB-DU 228 is a logical node that generally hosts the radio link control (RLC) and medium access control (MAC) layer of the gNB 222. Its operation is controlled by the gNB-CU 226. One gNB-DU 228 can support one or more cells, and one cell is supported by only one gNB-DU 228. The interface 232 between the gNB-CU 226 and the one or more gNB-DUs 228 is referred to as the "F1" interface. The physical (PHY) layer functionality of a gNB 222 is generally hosted by one or more standalone gNB-RUs 229 that perform functions such as power amplification and signal transmission/reception. The interface between a gNB-DU 228 and a gNB-RU 229 is referred to as the "Fx" interface. Thus, a UE 204 communicates with the gNB-CU 226 via the RRC, SDAP, and PDCP layers, with a gNB-DU 228 via the RLC and MAC layers, and with a gNB-RU 229 via the PHY layer.

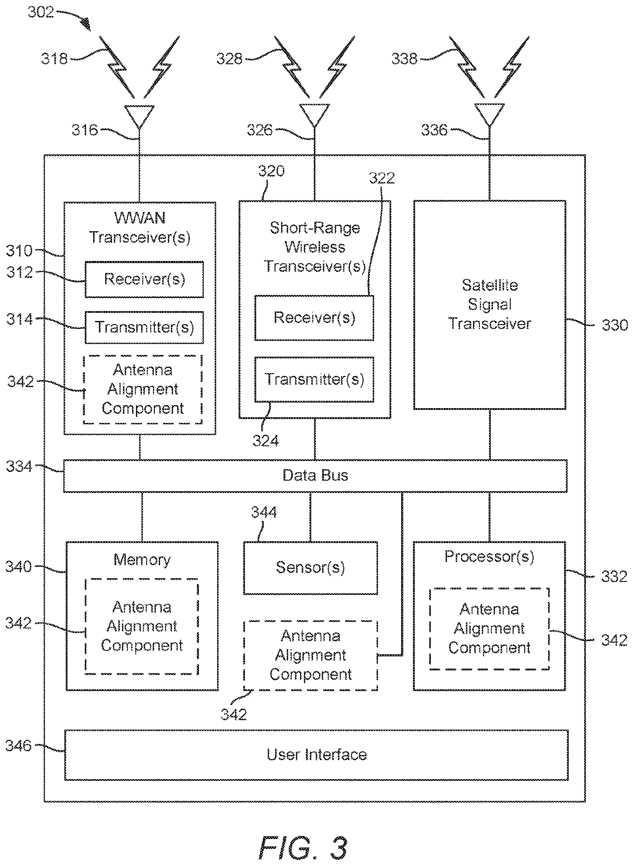

**FIG. 3** illustrates several example components (represented by corresponding blocks) that may be incorporated into a UE 302 (which may correspond to any of the UEs described herein). It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 includes one or more wireless wide area network (WWAN) transceivers 310 providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The one or more WWAN transceivers 310 may each be connected to one or more antennas 316 for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The one or more WWAN transceivers 310 may be variously configured for transmitting and encoding signals 318 (e.g., messages, indications, information, and so on) and, conversely, for receiving and decoding signals 318 (e.g., messages, indications, information, pilots, and so on) in accordance with the designated RAT. Specifically, the one or more WWAN transceivers 310 include one or more transmitters 314 for transmitting and encoding signals 318 and one or more receivers 312 for receiving and decoding signals 318.

The UE 302 also includes, at least in some cases, one or more short-range wireless transceivers 320. The one or more short-range wireless transceivers 320 may be connected to one or more antennas 326 and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., Wi-Fi, LTE-D, Bluetooth^{®}, Zigbee^{®}, Z-Wave^{®}, PC5, dedicated short-range communications (DSRC), wireless access for vehicular environments (WAVE), near-field communication (NFC), ultra-wideband (UWB), etc.) over a wireless communication medium of interest. The one or more short-range wireless transceivers 320 may be variously configured for transmitting and encoding signals 328 (e.g., messages, indications, information, and so on) and, conversely, for receiving and decoding signals 328 (e.g., messages, indications, information, pilots, and so on) in accordance with the designated RAT. Specifically, the one or more short-range wireless transceivers 320 include one or more transmitters 324 for transmitting and encoding signals 328 and one or more receivers 322 for receiving and decoding signals 328. As specific examples, the one or more short-range wireless transceivers 320 may be Wi-Fi transceivers, Bluetooth^{®} transceivers, Zigbee^{®} and/or Z-Wave^{®} transceivers, NFC transceivers, UWB transceivers, or vehicle-to-vehicle (V2V) and/or vehicle-to-everything (V2X) transceivers.

The UE 302 also includes, at least in some cases, a satellite signal transceiver 330 (e.g., capable of supporting a two-way satellite communication session with a satellite). The satellite signal transceiver 330 may be connected to one or more antennas 336 and may provide means for transmitting, receiving and/or measuring satellite positioning/communication signals 338. Where the satellite signal transceiver 330 is a satellite positioning system transceiver, the satellite positioning/communication signals 338 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal transceiver 330 is a non-terrestrial network (NTN) transceiver, the satellite positioning/communication signals 338 may be communication signals (e.g., carrying control and/or user data) originating from a 5G network. The satellite signal transceiver 330 may comprise any suitable hardware and/or software for transmitting, receiving and processing satellite positioning/communication signals 338. The satellite signal transceiver 330 may request information and operations as appropriate from the other systems, and, at least in some cases, perform calculations to determine locations of the UE 302 using measurements obtained by any suitable satellite positioning system algorithm. The satellite signal transceiver 330 may also be capable of transmitting or receiver communication signals that are not associated with position estimation, such as data communication signals (e.g., for emergency calls, etc.).

A transceiver may be configured to communicate over a wired or wireless link. A transceiver (whether a wired transceiver or a wireless transceiver) includes transmitter circuitry (e.g., transmitters 314, 324) and receiver circuitry (e.g., receivers 312, 322). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver may be coupled to one or more wired network interface ports. Wireless transmitter circuitry (e.g., transmitters 314, 324) may include or be coupled to a plurality of antennas (e.g., antennas 316, 326), such as an antenna array, that permits the respective apparatus (e.g., UE 302) to perform transmit "beamforming," as described herein. Similarly, wireless receiver circuitry (e.g., receivers 312, 322) may include or be coupled to a plurality of antennas (e.g., antennas 316, 326), such as an antenna array, that permits the respective apparatus (e.g., UE 302) to perform receive beamforming, as described herein. In an aspect, the transmitter circuitry and receiver circuitry may share the same plurality of antennas (e.g., antennas 316, 326), such that the respective apparatus can only receive or transmit at a given time, not both at the same time. A wireless transceiver (e.g., the one or more WWAN transceivers 310, the one or more short-range wireless transceivers 320) may also include a network listen module (NLM) or the like for performing various measurements.

As used herein, the various wireless transceivers (e.g., transceivers 310, 320) and wired transceivers may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station will generally relate to signaling via a wireless transceiver.

The UE 302 also includes other components that may be used in conjunction with the operations as disclosed herein. The UE 302 includes one or more processors 332 for providing functionality relating to, for example, wireless communication, and for providing other processing functionality. The one or more processors 332 may therefore provide means for processing, such as means for determining, means for calculating, means for receiving, means for transmitting, means for indicating, etc. In an aspect, the one or more processors 332 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302 includes memory circuitry implementing memory 340 (e.g., each including a memory device) for maintaining information (e.g., information indicative of reserved resources, thresholds, parameters, and so on). The memory 340 may therefore provide means for storing, means for retrieving, means for maintaining, etc. In some cases, the UE 302 may include an antenna alignment component 342. The antenna alignment component 342 may be hardware circuits that are part of or coupled to the one or more processors 332 that, when executed, cause the UE 302 to perform the functionality described herein. In other aspects, the antenna alignment component 342 may be external to the processors 332 (e.g., part of a modem processing system, integrated with another processing system, etc.). Alternatively, the antenna alignment component 342 may be a memory module stored in the memory 340 that, when executed by the one or more processors 332 (or a modem processing system, another processing system, etc.), cause the UE 302 to perform the functionality described herein. FIG. 3 illustrates possible locations of the antenna alignment component 342, which may be, for example, part of the one or more WWAN transceivers 310, the memory 340, the one or more processors 332, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal transceiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

The various components of the UE 302 may be communicatively coupled to each other over data bus 334. In an aspect, the data buses 334, may form, or be part of, a communication interface of the UE 302. For example, where different logical entities are embodied in the same device, the data bus 334 may provide communication between them.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on).

In satellite communication scenarios, it is important to align the main antenna lobe (or main beam) of the wireless user device with the line-of-sight (LOS) direction to the satellite due to the generally lower transmit power capabilities of the wireless user device and large path loss. For example, some wireless user devices provide an emergency satellite connectivity feature that gives users the ability to send emergency (SOS) messages via satellite. Because user devices generally have lower transmit power capabilities, sending an SOS message via satellite generally requires an unobstructed path to the satellite. Orienting the device so that the main antenna lobe is aligned with the LOS direction to the satellite is therefore very important to meet the link budget (i.e., the transmit power necessary for the emergency signal to be received at the satellite with acceptable signal-to-noise ratio (SNR)).

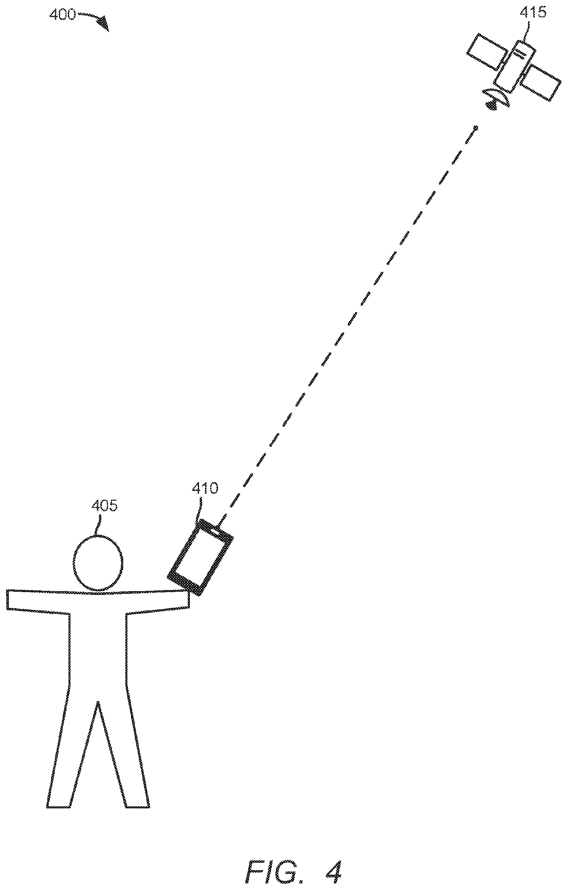

FIG. 4 is a diagram 400 illustrating an emergency message via satellite scenario in which a user 405 is orienting a mobile device 410 towards a satellite 415, according to aspects of the disclosure. As shown, by orienting the mobile device 410 towards the satellite 415, the main antenna lobe is aligned with the LOS direction to the satellite 415. In various aspects described herein, aligning a UE antenna with a satellite (or satellite antenna) 415 refers to the main antenna lobe (of the UE antenna and satellite antenna) are aligned (or within some threshold angular distance of each other). For example, the radiation pattern of most antennas is a pattern of "lobes" at various angles, i.e., directions where the radiated signal strength reaches a maximum, separated by "nulls," i.e., angles at which the radiation falls to zero. In a directional/beamforming antenna, where the objective is to emit radio waves in a particular direction, the lobe in that direction is designed to have higher field strength than the other lobes and is referred to as the "main lobe" (or "main antenna lobe" or the like). The other lobes are referred to as "sidelobes" and usually represent unwanted radiation in undesired directions. The main lobe of a handheld smartphone 410 typically radiates out the back of the device, but may in some cases radiate out the front of the device or in some other direction. As such, the device 405 may prompt the user 405 to place the device 405 face down on the ground (or face up or tilted, depending on the antenna design/placement) so that the main antenna lobe will be pointing towards the sky.

As another example, NTN connectivity is a feature of 5G NR and is important for service continuity. In this case, link budget and UE power consumption concerns, as well as the frequency bands used for NTN services, make beamforming at the UE challenging. As such, orienting the UE so that its antenna lobe is aligned with the direction of the satellite is highly desirable. Doing so can save power and reduce the bill of materials (BOM) (resulting in savings in the costs of the amplifier, antenna, etc.), for example.

Existing solutions for improving antenna alignment focus on visually interactive procedures requiring the user to physically reorient the device to achieve antenna-to-satellite alignment. In particular, the user is prompted with instructions via a display screen of the UE that indicates how to move the UE for proper satellite alignment.

However, there are scenarios where a visual user interface (e.g., a graphical user interface or GUI) is not practical or feasible. One example is when the user is "off-grid" for an extended time period with no access to power (e.g., he/she might conserve UE power by keeping the display screen turned off). Another example is a satellite-capable device that has no display. Finally, there may be situations when ambient brightness or the position of the device prevents the user from viewing the display screen and/or reading it.

In theory, using non-visual feedback such as haptics and/or audio on the primary device or a secondary device (e.g., smart watch or smart glasses or other wearable device) might be a very useful means to guide the user to achieve and maintain line-of-sight. However, there are several aspects that make this task difficult for a user, such as, e.g.:
- The location of the satellite is not known to the user, or
- The location and direction (orientation) of the antenna in the device are also not known to the user, or
- The satellite is moving (for nonstationary geo satellites such as low-earth orbit (LEO) satellites), or
- Obstacles might block the satellite (buildings, hills, and body parts), or
- Multiple satellites might be available at one time and one satellite might be less optimal over time while another becomes more suitable, or
- Any combination thereof.

Aspects of the present disclosure are directed to providing a user with feedback on how to align user feedback that is based on difference information associated with a difference between a current orientation of a UE and a target orientation of a UE for a two-way satellite communication session that provides a line of sight (LOS) alignment with an antenna of the UE with a satellite antenna (e.g., that is, aligning the main antenna lobes thereof with each other within some margin). In an aspect, the user feedback includes non-visual user feedback or visual feedback that is separate from a display screen of the UE. Such aspects may provide various technical advantages, such as reducing power consumption of the UE (e.g., by keeping the display screen off during the antenna alignment procedure), permitting user-based antenna alignment to be implemented with respect to UEs that are not equipped with a display screen, and so on.

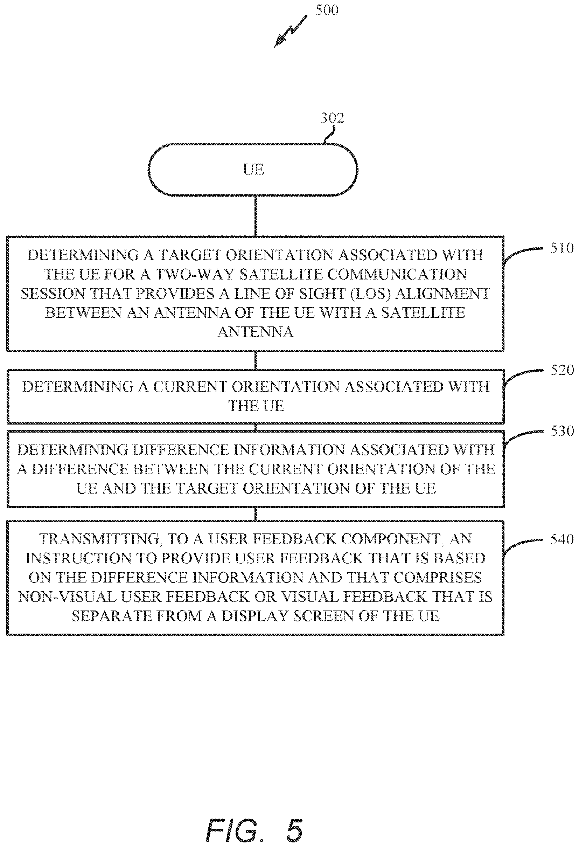

FIG. 5 illustrates an exemplary process 500 of communications according to an aspect of the disclosure. The process 5 of FIG. 5 is performed by a UE, such as UE 302.

Referring to FIG. 5, at 510, the UE (e.g., processor(s) 332, antenna alignment component 342, sensor(s) 344, etc.) determines a target orientation associated with the UE for a two-way satellite communication session that provides a line of sight (LOS) alignment between an antenna of the UE (e.g., an antenna associated with satellite signal transceiver 330) with a satellite antenna. In some designs, the target orientation may include a target orientation of the UE, which may be used to infer an associated orientation of the UE antenna (e.g., based on knowledge of where the UE antenna is located on the UE). In other designs, the target orientation determined at 510 may correspond to the UE antenna orientation itself. In some designs, the LOS alignment may be between respective main lobes of the UE antenna and the satellite antenna (e.g., in uplink direction, alignment between UE antenna Tx main lobe and satellite antenna Rx main lobe, or in downlink direction, alignment between UE Rx main lobe and satellite antenna Tx main lobe, or both). For example, signal strength measurements of one or more downlink satellite signals (e.g., pilot signals, etc.) may be used to determine the target orientation (e.g., as an offset from a reference orientation), in some designs. In some designs, a means for performing the determination of 510 may include processor(s) 332, antenna alignment component 342, sensor(s) 344, etc., of FIG. 3.

Referring to FIG. 5, at 520, the UE (e.g., processor(s) 332, antenna alignment component 342, sensor(s) 344, etc.) determines a current orientation associated with the UE. In some designs, the current orientation may include a current orientation of the UE, which may be used to infer an associated orientation of the UE antenna (e.g., based on knowledge of where the UE antenna is located on the UE). In other designs, the current orientation determined at 520 may correspond to the UE antenna orientation itself. For example, in some designs, one or more on-board sensors (e.g., sensor(s) 344) may be used to determine the current orientation associated with the UE (e.g., a gyroscope, an accelerometer, a magnetometer, etc., as an offset from a reference orientation). In some designs, a means for performing the determination of 520 may include processor(s) 332, antenna alignment component 342, sensor(s) 344, etc., of FIG. 3.

Referring to FIG. 5, at 530, the UE (e.g., processor(s) 332, antenna alignment component 342, etc.) determines difference information associated with a difference between the current orientation of the UE and the target orientation of the UE. For example, the difference information may include the difference between the current orientation of the UE and the target orientation of the UE, or the difference information may include whether a change in orientation of the UE is converging towards the target orientation or is moving away from the target orientation, or a combination thereof. In some designs, a means for performing the determination of 530 may include processor(s) 332, antenna alignment component 342, sensor(s) 344, etc., of FIG. 3.

Referring to FIG. 5, at 540, the UE (e.g., processor(s) 332, data bus 334, transmitter 314 or 324, etc.) transmits, to a user feedback component, an instruction to provide user feedback that is based on the difference information and that comprises non-visual user feedback or visual feedback that is separate from a display screen of the UE. In some designs, the user feedback component is integrated as part of the UE (e.g., an audio or haptic device or LED or lamp of the UE). In this case, the transmission of 540 may be a logical transfer of data over the data bus 334. In other designs, the user feedback component is integrated in a device that is separate from the UE. For example, this device may be a wearable device (e.g., a smart watch or ear buds or smart glasses, etc.) capable of emitting the respective non-visual user feedback or visual feedback, or a display screen associated with a vehicle (e.g., a vehicle display console). In a specific example, haptic feedback may be provided via a device (e.g., a wearable device) that is separate from the UE (e.g., user is using phone to connect to NTN satellite, while a wearable device such as a smartwatch is providing haptic feedback). In some designs, a means for performing the transmission of 540 may include processor(s) 332, data bus 334, transmitter 314 or 324, etc. of FIG. 3.

Referring to FIG. 5, in some designs, the user feedback may include the non-visual user feedback. For example, the non-visual user feedback may include haptic feedback, or audio feedback, or a combination thereof. In a further example, the user feedback is indicated based on an amplitude or intensity of the haptic feedback, the audio feedback, or both, or the user feedback is indicated based on a speed or frequency of the haptic feedback, the audio feedback, or both, or the user feedback is indicated based on spatial information associated with of haptic feedback, the audio feedback, or both or a combination thereof. For example, the non-visual user feedback may include beeps or vibrations that indicate the current orientation is moving closer or further away from the target orientation, or a current deviation between the current orientation and the target orientation, and so on. In another example, the user feedback may include a spatial audio aspect that is output via earbuds (e.g., a separate device from the UE such as a smartwatch), whereby a zero position is assumed when a user initiates an NTN communication through the GUI/button on a smartwatch. The smartwatch may pick up the direction information as the watch reference frame, which is then translated (by the smartwatch or the earbuds) into the earbuds' reference frame based on the relative position of the watch to the earbuds. The earbuds' changed positioned can be determined via IMU from the earbuds, and then a spatial audio cue is projected in the earbuds reference frame so the user knows where to hold their watch based on where the user is hearing the sound. Similarly, for haptic feedback, a spatial cue can be output as via vibration that appears, to the user, as if the vibration emanates from a direction/orientation at which the smartwatch should be held.

Referring to FIG. 5, in some designs, the UE may further output, before the two-way satellite communication session, training data to assist a user of the UE with respect to an initial candidate orientation of the UE for the LOS alignment. For example, the training data may train the user on how to hold the UE before the user feedback is provided for a particular orientation calibration session (e.g., hold UE with screen facing towards user or towards sky or towards ground, etc.).

Referring to FIG. 5, in some designs, the display screen of the UE remains off while the user feedback is output to the UE by the user feedback component (e.g., to conserve power). However, in other designs the display screen could be left on, or the UE may not be equipped with a display screen at all (or if initially so equipped, the display screen is now broken or unusable).

Referring to FIG. 5, in some designs, the UE further transmits, to another user feedback component, an additional instruction to provide additional user feedback associated with the LOS alignment. The type of user feedback that provides the additional user feedback may be distinct from the non-visual user feedback or visual feedback, in some designs. For example, the non-visual user feedback or visual feedback may emit beeps, while the additional user feedback may include a flashing LED or a spoken message or a vibration. In a specific example, the additional user feedback indicates that the UE is being moved too fast (e.g., irrespective of whether the current orientation is aligned or not). In a further example, the additional user feedback may include output of a countdown until a message is scheduled to be transmitted by the UE, or the additional user feedback can provide a "audio" progress bar when it plays audio cues around the user to indicate current progress (e.g. a sound or a auditory cue may be output when a message reaches 50% progress, when the message completes transmission, and so on).

More generally, the additional user feedback may be used in some cases to convey operability feedback that may detrimentally impact performance of the two-way satellite communication session irrespective of whether the orientation alignment itself is suitable.

Referring to FIG. 5, in some designs, the user feedback may include coded information (e.g., morse code or some other simple code, which may be conveyed via haptic feedback, audio feedback, LED or other non-screen visual feedback, and so on), the user feedback may include a pattern, or a combination thereof.

Referring to FIG. 5, in some designs, the UE may further detect an obstruction between the antenna of the UE and the satellite antenna, and may output navigation instructions to assist a user of the UE to maneuver to a location that bypasses the obstruction. For example, the navigation instructions may be based on the type of obstruction. For example, the obstruction may be a tree, in which case the navigation instructions may be output as a spoken message (or coded message) that instructs the user to move away from (or in a certain direction from) the tree by a certain distance (e.g., 30 feet, etc.). In another example, the obstruction may be a mountain, in which case the navigation instructions may be output as a spoken message (or coded message) that instructs the user to move away from (or in a certain direction from) the mountain by a certain distance (e.g., 30 feet, etc.), or to climb to the top of the mountain, or to climb to the other side of the mountain, and so on.

Referring to FIG. 5, in some designs, a smartwatch may be used as the user feedback component to guide the user to make a LOS connection with the satellite. This can be done to help the user point a smartphone or other wearable or it can be done to point the smartwatch itself, if the smartwatch has satellite capability. In the case of assisting the pointing of a smartphone, it is assumed that the two devices are connected in some way, such as Bluetooth. There are at least two solutions involving how the two devices communicate, e.g.:
- Option 1: The phone informs the watch of the satellite position(s) and current UE orientation, and then the watch does a calibration of the position of the phone. At that point, the watch does all the processing (i.e., using its own inertial measurement unit (IMU), the smartwatch may calculate the right position for the phone's antenna to be pointed at the satellite). In this case, the latency requirements are modest.
- Option 2: The phone does all the processing and just signals to the smartwatch when and how to inform the user to move (e.g., how to beep, how to vibrate, etc.). In this case, the data throughput requirements are probably modest so there are a variety of air interfaces that could be used. Latency, however, may be le[t quite low - e.g., so that the UI can respond to the user's movements.

In either Option 1 or Option 2, the UE of claim 5 may map to the phone, whereas the user feedback instruction may vary.

In the following example, the process 500 of FIG. 5 is described with respect to a specific example involving a UE in communication with a user feedback component arranged on a smartwatch. The example below may rely upon user feedback such as audio, haptics or a combination thereof. Also, the "orientation" includes multiple components, such as rotation (e.g., which may be body rotation of the user or hand rotation of the user), and Azimuth (or low to high)). The example below may or may be implemented from a standard or default initial location, which may be based on separate user training as noted above.

First, the UE and smartwatch establish a connection (e.g., a Bluetooth connection), and notify the user that the connection is established. The UE determines location of optimal satellite(s). The UE determines how the user needs to rotate a Rotation of the UE to align with the satellite (e.g., rotating the UE left or right). The UE then coordinates with the smartwatch so that the smartwatch pulses haptics slowly, with those haptics speeding up as the user moves the UE closer to the target Rotation aligned with the satellite or slowing down as the user moves the UE further away from the target Rotation aligned with the satellite. When an optimal (or aligned) Rotation is achieved, the smartwatch may output a unique pulse.

Next, the user may rotate the UE to achieve an Azimuth of the UE to align with the satellite (i.e., rotating the UE up or down). The UE then coordinates with the smartwatch so that the smartwatch pulses haptics slowly, with those haptics speeding up as the user moves the UE closer to the target Azimuth aligned with the satellite or slowing down as the user moves the UE further away from the target Azimuth aligned with the satellite. When an optimal (or aligned) Azimuth is achieved, the smartwatch may output a unique pulse. At this point, the UE antenna is LOS aligned with the satellite antenna, and the two-way satellite communication session may be conducted with higher reliability. It will be appreciated that, in other designs, the Azimuth (up / down) may be calibrated first, followed by the Rotation (left / right).

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an electrical insulator and an electrical conductor). Furthermore, it is also intended that aspects of a clause can be included in any other independent clause, even if the clause is not directly dependent on the independent clause.

Implementation examples are described in the following numbered clauses:
Clause 1. A method of operating a user equipment (UE), comprising: determining a target orientation associated with the UE for a two-way satellite communication session that provides a line of sight (LOS) alignment between an antenna of the UE with a satellite antenna; determining a current orientation associated with the UE; determining difference information associated with a difference between the current orientation of the UE and the target orientation of the UE; and transmitting, to a user feedback component, an instruction to provide user feedback that is based on the difference information and that comprises non-visual user feedback or visual feedback that is separate from a display screen of the UE.
Clause 2. The method of clause 1, wherein the user feedback component is integrated as part of the UE.
Clause 3. The method of any of clauses 1 to 2, wherein the user feedback component is integrated in a device that is separate from the UE.
Clause 4. The method of clause 3, wherein the device is a device, or wherein the device comprises a display screen associated with a vehicle.
Clause 5. The method of any of clauses 1 to 4, wherein the difference information comprises the difference between the current orientation of the UE and the target orientation of the UE, or wherein the difference information comprises whether a change in orientation of the UE is converging towards the target orientation or is moving away from the target orientation, or a combination thereof.
Clause 6. The method of any of clauses 1 to 5, wherein the user feedback comprises the non-visual user feedback.
Clause 7. The method of clause 6, wherein the non-visual user feedback comprises: haptic feedback, or audio feedback, or a combination thereof.
Clause 8. The method of clause 7, wherein the user feedback is indicated based on an amplitude or intensity of the haptic feedback, the audio feedback, or both, or wherein the user feedback is indicated based on a speed or frequency of the haptic feedback, the audio feedback, or both, or wherein the user feedback is indicated based on spatial information associated with of haptic feedback, the audio feedback, or both, or a combination thereof.
Clause 9. The method of any of clauses 1 to 8, further comprising: outputting, before the two-way satellite communication session, training data to assist a user of the UE with respect to an initial candidate orientation of the UE for the LOS alignment.
Clause 10. The method of any of clauses 1 to 9, wherein the display screen of the UE remains off while the user feedback is output to the UE by the user feedback component.
Clause 11. The method of any of clauses 1 to 10, further comprising: transmitting, to another user feedback component, an additional instruction to provide additional user feedback associated with the LOS alignment.
Clause 12. The method of clause 11, wherein the additional user feedback indicates that the UE is being moved too fast.
Clause 13. The method of any of clauses 1 to 12, wherein the user feedback comprises coded information, or wherein the user feedback comprises a pattern, or a combination thereof.
Clause 14. The method of any of clauses 1 to 13, further comprising: detecting an obstruction between the antenna of the UE and the satellite antenna; and outputting navigation instructions to assist a user of the UE to maneuver to a location that bypasses the obstruction.
Clause 15. A user equipment (UE), comprising: a memory; at least one transceiver; and at least one processor communicatively coupled to the memory and the at least one transceiver, the at least one processor configured to: determine a target orientation associated with the UE for a two-way satellite communication session that provides a line of sight (LOS) alignment between an antenna of the UE with a satellite antenna; determine a current orientation associated with the UE; determine difference information associated with a difference between the current orientation of the UE and the target orientation of the UE; and transmit, via the at least one transceiver, to a user feedback component, an instruction to provide user feedback that is based on the difference information and that comprises non-visual user feedback or visual feedback that is separate from a display screen of the UE.
Clause 16. The UE of clause 15, wherein the user feedback component is integrated as part of the UE.
Clause 17. The UE of any of clauses 15 to 16, wherein the user feedback component is integrated in a device that is separate from the UE.
Clause 18. The UE of clause 17, wherein the device is a wearable device, or wherein the device comprises a display screen associated with a vehicle.
Clause 19. The UE of any of clauses 15 to 18, wherein the difference information comprises the difference between the current orientation of the UE and the target orientation of the UE, or wherein the difference information comprises whether a change in orientation of the UE is converging towards the target orientation or is moving away from the target orientation, or a combination thereof.
Clause 20. The UE of any of clauses 15 to 19, wherein the user feedback comprises the non-visual user feedback.
Clause 21. The UE of clause 20, wherein the non-visual user feedback comprises: haptic feedback, or audio feedback, or a combination thereof.
Clause 22. The UE of clause 21, wherein the user feedback is indicated based on an amplitude or intensity of the haptic feedback, the audio feedback, or both, or wherein the user feedback is indicated based on a speed or frequency of the haptic feedback, the audio feedback, or both, or wherein the user feedback is indicated based on spatial information associated with of haptic feedback, the audio feedback, or both, or a combination thereof.
Clause 23. The UE of any of clauses 15 to 22, wherein the at least one processor is further configured to: output, before the two-way satellite communication session, training data to assist a user of the UE with respect to an initial candidate orientation of the UE for the LOS alignment.
Clause 24. The UE of any of clauses 15 to 23, wherein the display screen of the UE remains off while the user feedback is output to the UE by the user feedback component.
Clause 25. The UE of any of clauses 15 to 24, wherein the at least one processor is further configured to: transmit, via the at least one transceiver, to another user feedback component, an additional instruction to provide additional user feedback associated with the LOS alignment.
Clause 26. The UE of clause 25, wherein the additional user feedback indicates that the UE is being moved too fast.
Clause 27. The UE of any of clauses 15 to 26, wherein the user feedback comprises coded information, or wherein the user feedback comprises a pattern, or a combination thereof.
Clause 28. The UE of any of clauses 15 to 27, wherein the at least one processor is further configured to: detect an obstruction between the antenna of the UE and the satellite antenna; and output navigation instructions to assist a user of the UE to maneuver to a location that bypasses the obstruction.
Clause 29. A user equipment (UE), comprising: means for determining a target orientation associated with the UE for a two-way satellite communication session that provides a line of sight (LOS) alignment between an antenna of the UE with a satellite antenna; means for determining a current orientation associated with the UE; means for determining difference information associated with a difference between the current orientation of the UE and the target orientation of the UE; and means for transmitting, to a user feedback component, an instruction to provide user feedback that is based on the difference information and that comprises non-visual user feedback or visual feedback that is separate from a display screen of the UE.
Clause 30. The UE of clause 29, wherein the user feedback component is integrated as part of the UE.
Clause 31. The UE of any of clauses 29 to 30, wherein the user feedback component is integrated in a device that is separate from the UE.
Clause 32. The UE of clause 31, wherein the device is a wearable device, or wherein the device comprises a display screen associated with a vehicle.
Clause 33. The UE of any of clauses 29 to 32, wherein the difference information comprises the difference between the current orientation of the UE and the target orientation of the UE, or wherein the difference information comprises whether a change in orientation of the UE is converging towards the target orientation or is moving away from the target orientation, or a combination thereof.
Clause 34. The UE of any of clauses 29 to 33, wherein the user feedback comprises the non-visual user feedback.
Clause 35. The UE of clause 34, wherein the non-visual user feedback comprises: haptic feedback, or audio feedback, or a combination thereof.
Clause 36. The UE of clause 35, wherein the user feedback is indicated based on an amplitude or intensity of the haptic feedback, the audio feedback, or both, or wherein the user feedback is indicated based on a speed or frequency of the haptic feedback, the audio feedback, or both, or wherein the user feedback is indicated based on spatial information associated with of haptic feedback, the audio feedback, or both, or a combination thereof.
Clause 37. The UE of any of clauses 29 to 36, further comprising: means for outputting, before the two-way satellite communication session, training data to assist a user of the UE with respect to an initial candidate orientation of the UE for the LOS alignment.
Clause 38. The UE of any of clauses 29 to 37, wherein the display screen of the UE remains off while the user feedback is output to the UE by the user feedback component.
Clause 39. The UE of any of clauses 29 to 38, further comprising: means for transmitting, to another user feedback component, an additional instruction to provide additional user feedback associated with the LOS alignment.
Clause 40. The UE of clause 39, wherein the additional user feedback indicates that the UE is being moved too fast.
Clause 41. The UE of any of clauses 29 to 40, wherein the user feedback comprises coded information, or wherein the user feedback comprises a pattern, or a combination thereof.
Clause 42. The UE of any of clauses 29 to 41, further comprising: means for detecting an obstruction between the antenna of the UE and the satellite antenna; and means for outputting navigation instructions to assist a user of the UE to maneuver to a location that bypasses the obstruction.
Clause 43. A non-transitory computer-readable medium storing computer-executable instructions that, when executed by a user equipment (UE), cause the UE to: determine a target orientation associated with the UE for a two-way satellite communication session that provides a line of sight (LOS) alignment between an antenna of the UE with a satellite antenna; determine a current orientation associated with the UE; determine difference information associated with a difference between the current orientation of the UE and the target orientation of the UE; and transmit, to a user feedback component, an instruction to provide user feedback that is based on the difference information and that comprises non-visual user feedback or visual feedback that is separate from a display screen of the UE.
Clause 44. The non-transitory computer-readable medium of clause 43, wherein the user feedback component is integrated as part of the UE.
Clause 45. The non-transitory computer-readable medium of any of clauses 43 to 44, wherein the user feedback component is integrated in a device that is separate from the UE.
Clause 46. The non-transitory computer-readable medium of clause 45, wherein the device is a wearable device, or wherein the device comprises a display screen associated with a vehicle.
Clause 47. The non-transitory computer-readable medium of any of clauses 43 to 46, wherein the difference information comprises the difference between the current orientation of the UE and the target orientation of the UE, or wherein the difference information comprises whether a change in orientation of the UE is converging towards the target orientation or is moving away from the target orientation, or a combination thereof.
Clause 48. The non-transitory computer-readable medium of any of clauses 43 to 47, wherein the user feedback comprises the non-visual user feedback.
Clause 49. The non-transitory computer-readable medium of clause 48, wherein the non-visual user feedback comprises: haptic feedback, or audio feedback, or a combination thereof.
Clause 50. The non-transitory computer-readable medium of clause 49, wherein the user feedback is indicated based on an amplitude or intensity of the haptic feedback, the audio feedback, or both, or wherein the user feedback is indicated based on a speed or frequency of the haptic feedback, the audio feedback, or both, or wherein the user feedback is indicated based on spatial information associated with of haptic feedback, the audio feedback, or both, or a combination thereof.
Clause 51. The non-transitory computer-readable medium of any of clauses 43 to 50, further comprising computer-executable instructions that, when executed by the UE, cause the UE to: output, before the two-way satellite communication session, training data to assist a user of the UE with respect to an initial candidate orientation of the UE for the LOS alignment.
Clause 52. The non-transitory computer-readable medium of any of clauses 43 to 51, wherein the display screen of the UE remains off while the user feedback is output to the UE by the user feedback component.
Clause 53. The non-transitory computer-readable medium of any of clauses 43 to 52, further comprising computer-executable instructions that, when executed by the UE, cause the UE to: transmit, to another user feedback component, an additional instruction to provide additional user feedback associated with the LOS alignment.
Clause 54. The non-transitory computer-readable medium of clause 53, wherein the additional user feedback indicates that the UE is being moved too fast.
Clause 55. The non-transitory computer-readable medium of any of clauses 43 to 54, wherein the user feedback comprises coded information, or wherein the user feedback comprises a pattern, or a combination thereof.
Clause 56. The non-transitory computer-readable medium of any of clauses 43 to 55, further comprising computer-executable instructions that, when executed by the UE, cause the UE to: detect an obstruction between the antenna of the UE and the satellite antenna; and output navigation instructions to assist a user of the UE to maneuver to a location that bypasses the obstruction.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

Embodiments of the invention can be described with reference to the following numbered clauses, with preferred features laid out in the dependent clauses:
1. A method of operating a user equipment (UE), comprising:
   determining a target orientation associated with the UE for a two-way satellite communication session that provides a line of sight (LOS) alignment between an antenna of the UE with a satellite antenna;
   determining a current orientation associated with the UE;
   determining difference information associated with a difference between the current orientation of the UE and the target orientation of the UE; and
   transmitting, to a user feedback component, an instruction to provide user feedback that is based on the difference information and that comprises non-visual user feedback or visual feedback that is separate from a display screen of the UE.
2. The method of clause 1, wherein the user feedback component is integrated as part of the UE.
3. The method of clause 1, wherein the user feedback component is integrated in a device that is separate from the UE.
4. The method of clause 3,
   wherein the device is a wearable device, or
   wherein the device comprises a display screen associated with a vehicle.
5. The method of clause 1,
   wherein the difference information comprises the difference between the current orientation of the UE and the target orientation of the UE, or
   wherein the difference information comprises whether a change in orientation of the UE is converging towards the target orientation or is moving away from the target orientation, or
   a combination thereof.
6. The method of clause 1, wherein the user feedback comprises the non-visual user feedback.
7. The method of clause 6, wherein the non-visual user feedback comprises:
   haptic feedback, or
   audio feedback, or
   a combination thereof.
8. The method of clause 7,
   wherein the user feedback is indicated based on an amplitude or intensity of the haptic feedback, the audio feedback, or both, or
   wherein the user feedback is indicated based on a speed or frequency of the haptic feedback, the audio feedback, or both, or
   wherein the user feedback is indicated based on spatial information associated with of haptic feedback, the audio feedback, or both, or
   a combination thereof.
9. The method of clause 1, further comprising:
   outputting, before the two-way satellite communication session, training data to assist a user of the UE with respect to an initial candidate orientation of the UE for the LOS alignment.
10. The method of clause 1, wherein the display screen of the UE remains off while the user feedback is output to the UE by the user feedback component.
11. The method of clause 1, further comprising:
   transmitting, to another user feedback component, an additional instruction to provide additional user feedback associated with the LOS alignment.
12. The method of clause 11, wherein the additional user feedback indicates that the UE is being moved too fast.
13. The method of clause 1,
   wherein the user feedback comprises coded information, or
   wherein the user feedback comprises a pattern, or
   a combination thereof.
14. The method of clause 1, further comprising:
   detecting an obstruction between the antenna of the UE and the satellite antenna; and
   outputting navigation instructions to assist a user of the UE to maneuver to a location that bypasses the obstruction.
15. A user equipment (UE), comprising:
   a memory;
   at least one transceiver; and
   at least one processor communicatively coupled to the memory and the at least one transceiver, the at least one processor configured to:
   determine a target orientation associated with the UE for a two-way satellite communication session that provides a line of sight (LOS) alignment between an antenna of the UE with a satellite antenna;
   determine a current orientation associated with the UE;
   determine difference information associated with a difference between the current orientation of the UE and the target orientation of the UE; and
   transmit, via the at least one transceiver, to a user feedback component, an instruction to provide user feedback that is based on the difference information and that comprises non-visual user feedback or visual feedback that is separate from a display screen of the UE.
16. The UE of clause 15, wherein the user feedback component is integrated as part of the UE.
17. The UE of clause 15, wherein the user feedback component is integrated in a device that is separate from the UE.
18. The UE of clause 17,
   wherein the device is a wearable device, or
   wherein the device comprises a display screen associated with a vehicle.
19. The UE of clause 15,
   wherein the difference information comprises the difference between the current orientation of the UE and the target orientation of the UE, or
   wherein the difference information comprises whether a change in orientation of the UE is converging towards the target orientation or is moving away from the target orientation, or
   a combination thereof.
20. The UE of clause 15, wherein the user feedback comprises the non-visual user feedback.
21. The UE of clause 20, wherein the non-visual user feedback comprises:
   haptic feedback, or
   audio feedback, or
   a combination thereof.
22. The UE of clause 21,
   wherein the user feedback is indicated based on an amplitude or intensity of the haptic feedback, the audio feedback, or both, or
   wherein the user feedback is indicated based on a speed or frequency of the haptic feedback, the audio feedback, or both, or
   wherein the user feedback is indicated based on spatial information associated with of haptic feedback, the audio feedback, or both, or
   a combination thereof.
23. The UE of clause 15, wherein the at least one processor is further configured to:
   output, before the two-way satellite communication session, training data to assist a user of the UE with respect to an initial candidate orientation of the UE for the LOS alignment.
24. The UE of clause 15, wherein the display screen of the UE remains off while the user feedback is output to the UE by the user feedback component.
25. The UE of clause 15, wherein the at least one processor is further configured to:
   transmit, via the at least one transceiver, to another user feedback component, an additional instruction to provide additional user feedback associated with the LOS alignment.
26. The UE of clause 25, wherein the additional user feedback indicates that the UE is being moved too fast.
27. The UE of clause 15,
   wherein the user feedback comprises coded information, or
   wherein the user feedback comprises a pattern, or
   a combination thereof.
28. The UE of clause 15, wherein the at least one processor is further configured to:
   detect an obstruction between the antenna of the UE and the satellite antenna; and
   output navigation instructions to assist a user of the UE to maneuver to a location that bypasses the obstruction.
29. A user equipment (UE), comprising:
   means for determining a target orientation associated with the UE for a two-way satellite communication session that provides a line of sight (LOS) alignment between an antenna of the UE with a satellite antenna;
   means for determining a current orientation associated with the UE;
   means for determining difference information associated with a difference between the current orientation of the UE and the target orientation of the UE; and
   means for transmitting, to a user feedback component, an instruction to provide user feedback that is based on the difference information and that comprises non-visual user feedback or visual feedback that is separate from a display screen of the UE.
30. A non-transitory computer-readable medium storing computer-executable instructions that, when executed by a user equipment (UE), cause the UE to:
   determine a target orientation associated with the UE for a two-way satellite communication session that provides a line of sight (LOS) alignment between an antenna of the UE with a satellite antenna;
   determine a current orientation associated with the UE;
   determine difference information associated with a difference between the current orientation of the UE and the target orientation of the UE; and
   transmit, to a user feedback component, an instruction to provide user feedback that is based on the difference information and that comprises non-visual user feedback or visual feedback that is separate from a display screen of the UE.

## Claims

1. A method (500) of operating a user equipment, UE (302), comprising:
determining (510) a target orientation associated with the UE for a two-way satellite communication session that provides a line of sight, LOS alignment between an antenna of the UE with a satellite antenna;
determining (520) a current orientation associated with the UE;
determining (530) difference information associated with a difference between the current orientation of the UE and the target orientation of the UE;
transmitting (540), to a user feedback component, an instruction to provide user feedback that is based on the difference information and that comprises non-visual user feedback or visual feedback that is separate from a display screen of the UE; and
outputting, before the two-way satellite communication session, training data to assist a user of the UE with respect to an initial candidate orientation of the UE for the LOS alignment.

2. The method (500) of claim 1, wherein the user feedback component is integrated as part of the UE (302).

3. The method (500) of claim 1, wherein the user feedback component is integrated in a device that is separate from the UE (302).

4. The method (500) of claim 3,
wherein the device is a wearable device, or
wherein the device comprises a display screen associated with a vehicle.

5. The method (500) of claim 1,
wherein the difference information comprises the difference between the current orientation of the UE and the target orientation of the UE (302), or
wherein the difference information comprises whether a change in orientation of the UE is converging towards the target orientation or is moving away from the target orientation, or
a combination thereof.

6. The method (500) of claim 1, wherein the user feedback comprises the non-visual user feedback.

7. The method (500) of claim 6, wherein the non-visual user feedback comprises:
haptic feedback, or
audio feedback, or
a combination thereof.

8. The method (500) of claim 7,
wherein the user feedback is indicated based on an amplitude or intensity of the haptic feedback, the audio feedback, or both, or
wherein the user feedback is indicated based on a speed or frequency of the haptic feedback, the audio feedback, or both, or
wherein the user feedback is indicated based on spatial information associated with of haptic feedback, the audio feedback, or both, or
a combination thereof.

9. The method (500) of claim 1, further comprising:
transmitting, to another user feedback component, an additional instruction to provide additional user feedback associated with the LOS alignment.

10. The method (500) of claim 9, wherein the additional user feedback indicates that the UE (302) is being moved too fast.

11. The method (500) of claim 1,
wherein the user feedback comprises coded information, or
wherein the user feedback comprises a pattern, or
a combination thereof.

12. The method (500) of claim 1, further comprising:
detecting an obstruction between the antenna of the UE (302) and the satellite antenna; and
outputting navigation instructions to assist a user of the UE (302) to maneuver to a location that bypasses the obstruction.

13. A user equipment, UE (302), comprising:
a memory (340);
at least one transceiver (310, 320, 330); and
at least one processor (332) communicatively coupled to the memory and the at least one transceiver, the at least one processor configured to:
determine a target orientation associated with the UE for a two-way satellite communication session that provides a line of sight, LOS, alignment between an antenna of the UE with a satellite antenna;
determine a current orientation associated with the UE;
determine difference information associated with a difference between the current orientation of the UE and the target orientation of the UE;
transmit, via the at least one transceiver, to a user feedback component, an instruction to provide user feedback that is based on the difference information and that comprises non-visual user feedback or visual feedback that is separate from a display screen of the UE; and
output, before the two-way satellite communication session, training data to assist a user of the UE with respect to an initial candidate orientation of the UE for the LOS alignment.

14. The UE of claim 13, wherein the user feedback component is integrated as part of the UE.

15. A non-transitory computer-readable medium storing computer-executable instructions that, when executed by a user equipment, UE (302), cause the UE to:
determine (510) a target orientation associated with the UE for a two-way satellite communication session that provides a line of sight, LOS, alignment between an antenna of the UE with a satellite antenna;
determine (520) a current orientation associated with the UE;
determine (530) difference information associated with a difference between the current orientation of the UE and the target orientation of the UE; and
transmit (540), to a user feedback component, an instruction to provide user feedback that is based on the difference information and that comprises non-visual user feedback or visual feedback that is separate from a display screen of the UE; and
output, before the two-way satellite communication session, training data to assist a user of the UE with respect to an initial candidate orientation of the UE for the LOS alignment.
